# EUROPEAN PATENT SPECIFICATION

(11) **EP 1 057 335 B1**
(45) Date of publication and mention of the grant of the patent: **22.05.2002**
(21) Application number: 99900081.3
(22) Date of filing: 18.01.1999
(51) Int. Cl.: H04N 7/10, H04N 7/16

(54) **UNIVERSAL SIGNAL DISTRIBUTION SYSTEM**
UNIVERSELLES SIGNALVERTEILSYSTEM
SYSTEME UNIVERSEL DE DIFFUSION DE SIGNAUX

(30) Priority: 20.01.1998 IT TO980049; 08.10.1998 IT TO980184 U; 17.11.1998 IT TO980967; 30.12.1998 IT TO981109
(43) Date of publication of application: 06.12.2000
(73) Proprietor: Fracarro Radioindustrie S.p.a., 31033 Castelfranco Veneto (IT)
(72) Inventor: POLO FILISAN, Andrea, I-33170 Pordenone (IT)
(74) Representative: Dini, Roberto, Dr. Ing.
(86) International application number: IB9900046
(87) International publication number: WO9937092

(56) References cited:
- EP-A- 0 457 673
- WO-A-96/41438
- DE-A- 4 012 657
- US-A- 5 497 186
- US-A- 5 574 964

## Description

The present industrial invention refers to a distribution system of a plurality of television signals, and/or audio signals, in particular pertaining to different standards, in a condominium and/or community environment. By condominium is meant a block of flats, and by community a block of one or several buildings.

Development of digital technology, in particular of signal compression techniques, has led to the introduction of digital television by terrestrial, cable and satellite transmission. Digital television offers the advantage of a wider programs availability (for instance, 4 to 6 digital programs can in fact be allocated in the frequency band occupied by an analog channel), and implementation of the new so-called interactive services, such as video on demand, called VOD (Video on Demand) or NVOD (Near Video on Demand). Obviously, different equipments from those used for analog signals are required to receive such new digital signals, which may lead to conflicting interests, for instance among the residents in a condominium or community.

Many users, in fact, wish to have access to the new programs and services available, while other users - either due to their lack of interest towards novelties or for financial reasons - make recourse to condominium management rules, which impose the majority's approval to implement such novelties, also considering that a high uncertainty still exists about their real cost/benefits ratio. Further inconveniences are introduced by the fact that said interactive services also require for the distribution system to be capable not only of receiving signals from the provider, the so-called downstream signals, but also capable of transmitting signals to the provider, the so-called upstream signals.

Moreover, in most cases, both the programs and interactive services are supplied against payment, through a conditioned access system managed by the broadcaster and based on the use of smart cards, where each user should be able to operate on the distribution system through smart cards, in order to decode the programs purchased under exclusivity.

Now, installation complexity for the systems already known will obviously increase to a considerable extent due to all these further functions required for the distribution system.

From document US-A-5 574 964 is known a system for the distribution of multiple received signals having different formats using a single pre-existing network.

The system there disclosed provides for a preliminary conversion of all received signals in a bus signal having a certain bandwidth (1GHz). Said bus signal runs on a bus constituting the distribution network. Each received signal is converted in a predetermined, frequency position place on the span of said bandwidth. A control computer interfaced to the bus, also adds addresses and commands in predetermined frequency position to the bus signals, according to the user needs.

From document EP-A-0 457 673, is known a control system of audio-video reproducing apparatuses in a community. Said system is so conceived that the audiovideo information coming out from each electronic apparatus is frequency multiplexed in a specific channel on a common bus signal. Further, a channel content information is provided, indicating the audio video information allocated to the respective channels and an information indicating the room (the socket) using the electronic apparatus and its related channel. The reason for giving such informations is to let the other users know the channels and apparatuses that are in use, in order to avoid the selection of said used channels and the disturbance of the system.

The present invention has the aim of providing a distribution system which, by solving the above drawbacks, allows for the distribution of a plurality of services in a condominium and/or community environment, independently from the type of standards of the signals received and the time when such signals become available; which also allows gradual implementation of the system based on the free decision of each individual user, obviously without affecting the service already supplied by the system.

A further aim of the present invention is to provide a distribution system of digital signals in a condominium and/or community environment, which allows each user to use said digital signals in a bi-directional way, without affecting the service already supplied by the system.

A further aim of the present invention is to provide a fast installation of the system associated with the use of a smart card, while protecting the broadcaster's interests and the user's privacy.

A system according to the invention is set out in claim 1 and a corresponding method is set out in claim 50.

Further objects and advantages of the present invention will become apparent from the following detailed description and annexed drawings, which are supplied by way of non limiting example, wherein:
- Fig. 1 shows the subdivision of the frequency band used for the signal distribution;
- Fig. 2 shows a known distribution system of a plurality of signals in a condominium and/or community environment.
- Fig. 3 shows a distribution system of a plurality of signals in a condominium and/or community environment according to the invention;
- Fig. 4 shows a first variant embodiment of the distribution system of a plurality of signals in a condominium and/or community environment according of Fig. 3;
- Fig. 5 shows a detail of the first variant embodiment represented in Fig. 4;
- Fig. 6 shows a second variant embodiment of the distribution system of a plurality of signals in a condominium and/or community environment represented in Fig. 3;
- Fig. 7 shows a possible frequency subdivision of the signals used for the second variant embodiment represented in Fig. 6;
- Fig. 8 shows a third variant embodiment of the distribution system of a plurality of signals in a condominium and/or community environment represented in Fig. 3.

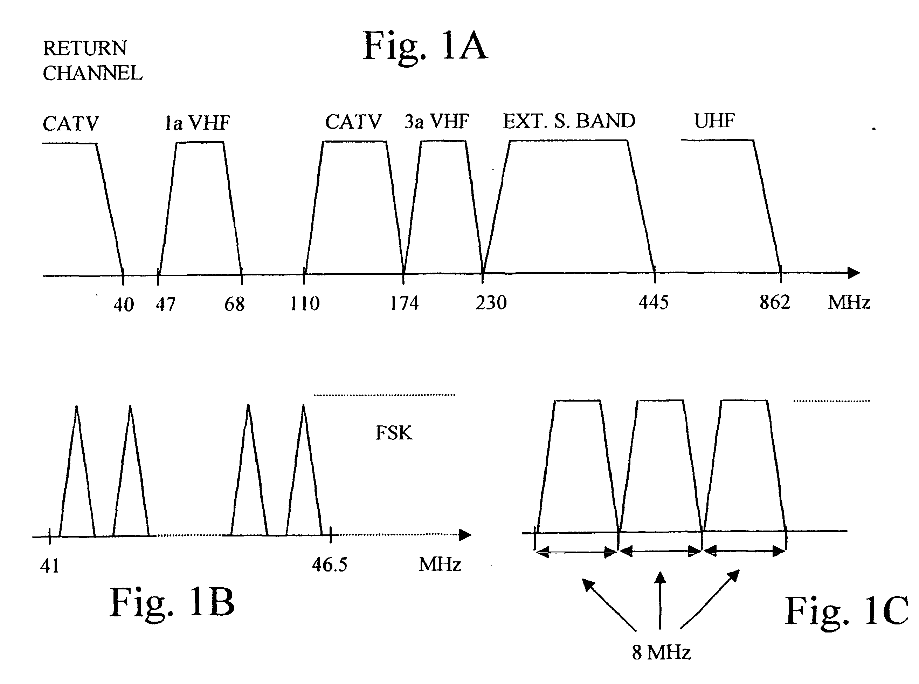

Figure 1A shows schematically the frequencies spectrum used for signals distribution; specifically, the band up to 40 MHz is engaged by the CATV return channels (CAble TV) for communications exchange between the user and the service supplier; 47-68 MHz and 174-230 MHz bands contain the television channels pertaining to the 1st VHF band and 3rd VHF band, respectively; UHF television channels are allocated in the 470-862 MHz band. Both the 110-174 MHz and 230-445 MHz bands are partially used for the distribution of CATV channels and converted satellite channels. The 230-445 MHz band is also known as extended S band. VHF bands are subdivided into 7 MHz wide channels, whereas CATV and UHF channels are 8 MHz wide, as shown schematically in Fig. 1C. Figure 1B shows schematically a particular use of the spectrum in the range of 41-46.5 MHz, which will be described in the following.

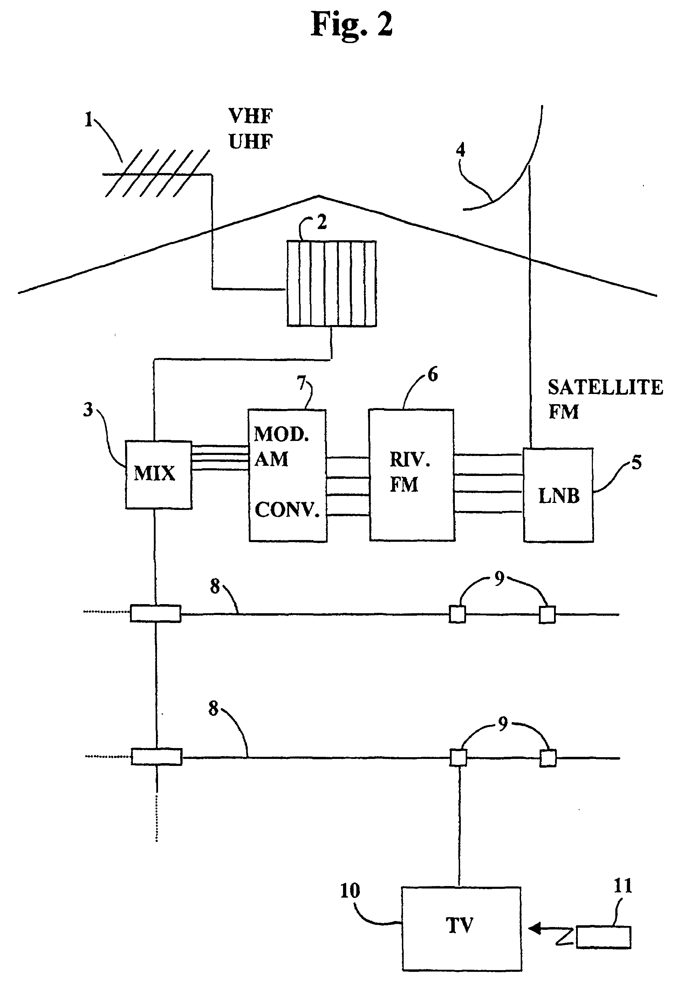

Figure 2 shows a known system for the reception and the distribution of signals. Number 1 indicates a set of aerials for receiving VHF and UHF signals amplified by means of channel amplifiers, represented by block 2, and subsequently sent to a mixer 3 and then distributed. Number 4 indicates an aerial to receive satellite signals, which are notoriously transmitted in the band around 12 GHz in 27 MHz wide channels, with an FM modulated carrier. Block 5 represents a so-called LNB (Low Noise Block) of the universal type, which amplifies and convert in the first intermediate 0.950 - 2.050 GHz frequency both the analog signals in 27 MHz channels and the digital signals in 36 MHz channels. Block 6 reveals the FM signals, which are thus AM remodulated and converted in VHF, UHF or extended S band channels by block 7.

The signals are then sent to the mixer 3 and then distributed. The lines indicated with 8 represent the entries to the various flats consisting of a coaxial cable; number 9 indicates the signal sockets available in the flats, whereas 10 indicates a user terminal, in the specific instance a television set receiver that can be operated by a remote control 11.

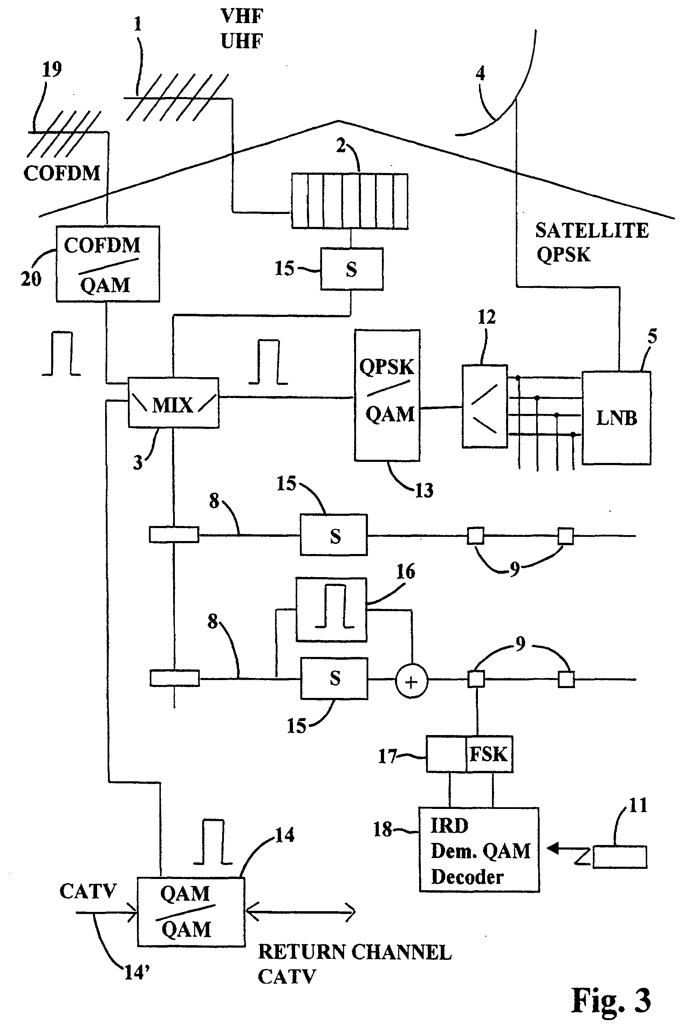

Figure 3 represents a distribution system of a plurality of signals in a condominium and/or community environment according to the present invention, where the possibility of receiving both the analog television signals and new digital signals is considered. It has to be noticed that the blocks indicated with the same reference number in Fig. 2 and Fig. 3 perform the same functions; thus, blocks 4 and 5 are used to receive both the analog and digital signals from satellite. In Fig. 3, blocks 6 and 7 shown of Fig. 2, specifically related to analog signals, are omitted for clarity's sake.

In the diagram shown in Fig. 3 three different types of received digital television signals are indicated; however the following description applies for any digital signals, such as the DAB signal (Digital Audio Broadcasting) for digital radio broadcasting, or a data carrying signal, or a video signal in general. By the set of aerials 19 the terrestrial digital television signals are received, which according to DVB Specifications (Digital Video Broadcasting) have COFDM modulation (Coded Orthogonal Frequency Division Multiplexing) and are transmitted through the same channel system for VHF and UHF analog signals.

The block 14 receives, through a coaxial cable 14', the digital CATV signal, being QAM modulated (Quadrature Amplitude Modulation) in 8 MHz channels, whereas as mentioned above the aerial 4 receives digital signals from satellite, being QPSK modulated (Quadrature Phase Shift Keying). It will be appreciated that the above digital, terrestrial, satellite and cable signals are modulated in different modes (COFDM, QPSK, QAM, respectively), so that three different types of demodulators are required for their use. Typically, transmission of either QAM or QPSK modulated digital signals is performed under SCPC procedures (Single Channel Per Carrier), whereas transmission of digital television signals as provided by the DVB standard (Digital Video Broadcasting) occurs under MCPC procedure (Multi Channel Per Carrier).

At the entry of every flat or building an S band-stop filter, being represented by blocks 15, is connected in series with the distribution cable, i.e. a filter blocking the passage of signals comprised within a predetermined band, thus hindering their reception inside the flat or building. Therefore, this band is a reserved band within the distribution in a condominium and/or community environment, being inhibited to all users who do not wish to receive new signals. Obviously, in order to ensure the pre-existing service, all analog signals have to be distributed in channels not comprised in the above reserved band, and this can be easily obtained using the known frequency conversion technique. It is clear that the above reserved band may consist of several parts and in this case the filter 15 inhibits the flow of signals in several bands, for example in the extended S band and the 110-174 MHz band. In order to avoid possible interferences, it is appropriate to have the band-stop filter also inserted at the output of block 2. The so modified system represents the basic structure for subsequent implementations.

Should one or more users in fact decide at a certain time to have access to new digital signals, for each user the following devices would have to be installed, which will be added without modifying the existing system:
1. A transponder preselection circuit, indicated by block 12 in Fig. 3, for selecting one of the four bands exiting the LNB (high band, low band, horizontal polarization and vertical polarization). As known, the transponder is a frequency amplifier and converter device, irradiating signals from the satellite.
2. A QPSK/QAM transmodulator, indicated by block 13, which selects the digital signal from satellite, demodulates it, remodulates it in QAM and converts it into a predetermined channel for the sole use of a single user among those who have accepted the system implementation (practically, a personal channel being comprised in the above reserved band); this channel has preferably an 8 MHz band width. The signal is then sent to the mixer 3. Substantially, the reserved band is subdivided into a plurality of channels being available to the users wishing to receive new signals.
3. A COFDM/QAM transmodulator, indicated by block 20, which selects a terrestrial digital television signal, demodulates it, remodulates it in QAM, converts it into the above reserved channel and sends it to the mixer 3.
4. A block 14, which selects the CATV digital signal, converts it into the above personal channel and sends it to the mixer 3.
5. A selective channel-pass filter, indicated by block 16 which, arranged in parallel to the band-stop filter, allows the user to receive his own personal channel. The symbol + indicates a signals adder.
6. A QAM demodulator, which may be contained in an appropriate module, or belong to the IRD receiver-decoder 18 (Integrated Receiver Decoder), as indicated in Fig. 3.
7. A user terminal, indicated by block 17, which represents the interface between the distribution system and the user. Through said terrninal the user is able, by operating on modules 12, 13, 14 and 20, to select the source and the desired channel to be sent to the personal channel, and adjust various parameters, such as satellite type, signal polarization, QAM signal level, sending appropriate controls through a return-channel, as described in the following.
   If, for instance, the reception of a determined digital channel from satellite is desired, the user will operate on the preselector 12 to choose the band and will enable the output of block 13 towards the mixer 3, whereas the outputs of blocks 14 and 20 towards the mixer 3 are locked.
   The user terminal 17 can either be an independent block or, as in Fig. 3, communicate with the IRD receiver indicated by block 18, which QAM demodulates the digital signal, decodes it and sends it to the television set not shown in the figure. In this instance, the user terminal and the IRD receiver may be controlled through the same remote control 11.
8. A return-channel module, which may be contained in the user terminal 17 as shown in Fig. 3 and allows the user to control blocks 12, 13, 14 and 20. In case of low bit rates, i.e. 9.6 Kbit/s and multiples up to 48 Kbit/s, either FSK (Frequency Shift Keying) or PSK (Phase Shift Keying) modulation may be used, which are allocated to a 128 KHz wide channel, so as to have the same minimum band width as provided by the DVB-RC standard on the return-channel. Should higher bit rates be requested, then 18 KHz multiple band widths can be used as provided in said standard, ranging from a minimum of 256 Kbit/s bit rate with a 128 KHz band up to 3.088 Mbit/s with a 1.544 MHz band using QPSK modulation, and up to 12.8 Mbit/s with a 3.2 Mhz band using QAM modulation 16. Information sent on the return channel may eventually go further than the respective transmodulator and be sent outside the building in many ways (telephone line, by satellite, etc.). Control instructions for the transmodulator may use packets as provided in the DVB-RC standard. The return channel may be allocated to the frequency band directly below the television channels band, for example within the range 41-46.5 MHz according to the European B standard, as shown in Fig 1B Said return channel can be a bi-directional channel, i.e. a transmodulator, upon receiving a control from the user terminal 17, can reply by giving the user terminal 17 confirmation of the performed operation, or supplying other data as requested. In any event, it is also possible that the transmodulator starts a communication on the return channel, for instance when the installer is in the loft and wants to change some parameters of the IRD receiver 18. Bi-directional communication is performed under TDMA procedure (Time Division Multiplexing Access). Obviously, each user shall have his own personal return channel. Advantageously, this signal can be sent through the common distribution coaxial cable of the system.

By the system described above, a single user may, along with analog signals, also have in his flat a digital signal of his own choice containing 4 to 6 programs, each one being receivable from an IRD in an independent mode. In order to have simultaneous availability of two digital channels, another personal channel with its associated transmodulators and channel-pass filter need to be installed; of course, availability of at least two IRDs is also required.

The condominium and/or community distribution system of a plurality of signals described above offers a high flexibility and can freely accept subsequent gradual implementations, without causing any conflicts with the rules governing the condominium or community.

The distribution system of a plurality of signals in a condominium and/or community environment according to the present invention offers a further advantage in that the same system wired for analog signals can also be used for the new signals distribution, i.e. without requiring a new wiring setup.

Moreover, the single user only requires one demodulator for digital signals, as these signals are all QAM remodulated before their distribution. In addition, such a transmodulation drastically reduces the problems of interferences, signals equalizations and intermodulation, being usually present in the case of a multistandard distribution.

The signals distribution system shown in Fig. 3 requires installation, for each new user wishing access to new digital signals (for example those irradiated by satellite), of a proper transmodulator 13 for each signal pertaining to a different standard, said transmodulator 13 comprising at least a tuner for selecting the signal, a demodulator, a QAM modulator and a frequency converter.

In view of costs, it will be noticed that for each user an equal number of transmodulators is required, bound to the number of digital signals with different standards to be received.

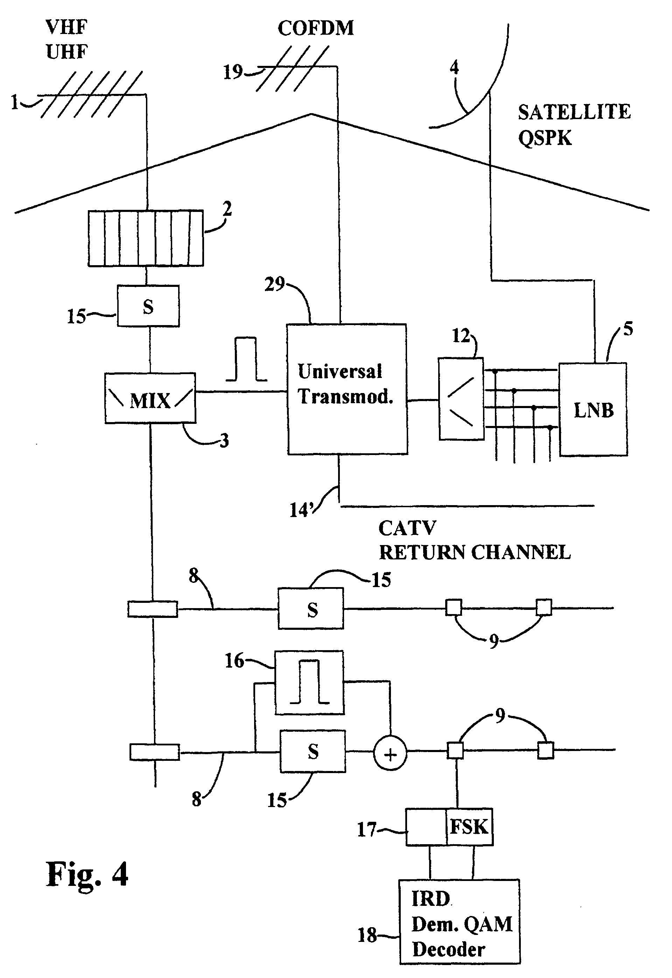

Therefore, in Fig. 4 the diagram of a variant embodiment of the distribution system of a plurality of signals in a condominium and/or community environment of Fig. 3 is shown, which comprises a modified transmodulation device.

In the embodiment of Fig. 4, instead of sending each digital signal to a different transmodulator 13, 14, or 20, the digital signals are sent to a sole "universal" transmodulator, represented by block 29; the remaining blocks shown in Fig. 4 with the same reference number have the same function of the blocks already shown in Fig. 3.

As it will be appreciated, Fig. 4 shows three different types of received digital television signals; however, the following description applies for any digital signal, such as the DAB (Digital Audio Broadcasting) signal for digital radio broadcasting and/or a data carrying signal and/or a video signal in general.

Once transmodulators 13, 14 and 20 of Fig. 3 are replaced by the transmodulator 29 of Fig. 4, the remaining portion of the distribution system of a plurality of signals in a condominium and/or community environment will operate in the same way.

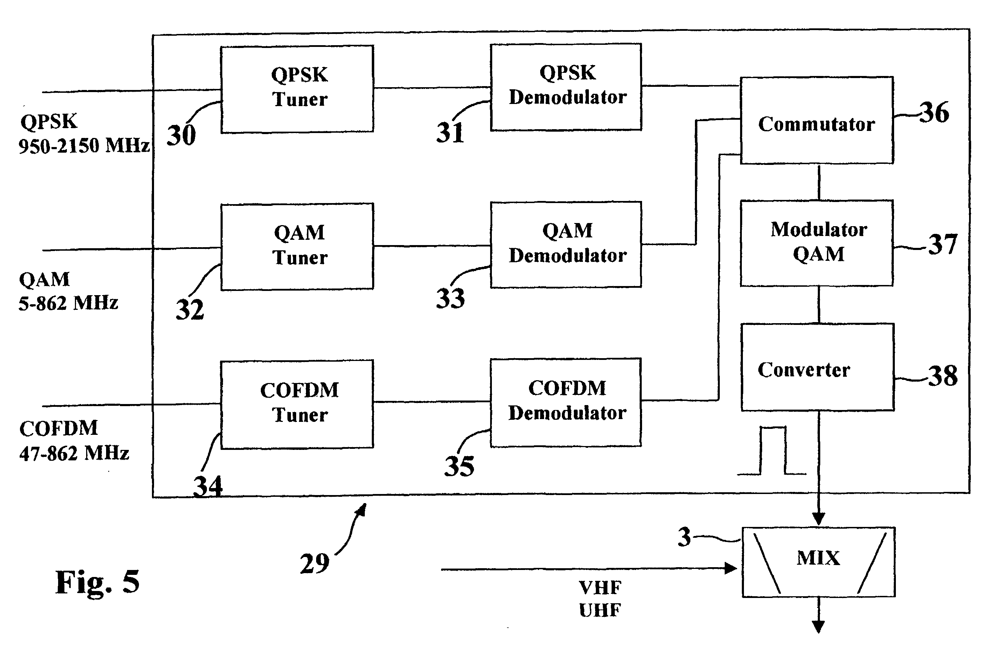

A way to provide the block 29 is detailed in Fig. 5, where the block 30 represents a tuner for selecting, in the QPSK range 950-2150 MHz, satellite digital channels QPSK modulated and properly preselected in the block 12; the digital channel selected in block 30 under the user's control is then demodulated by a QPSK demodulator represented by block 31.

Block 32 represents a tuner for the selection of the QAM modulated digital channels received by cable in the range 5-862 MHz; the digital channel tuned by the block 32 under the user's control is then demodulated by a QAM demodulator represented by block 33.

Block 34 represents a tuner for the selection, in the range 47-862 Mhz, of COFDM modulated terrestrial digital channels; the digital channel tuned by the block 34 under the user's control is then demodulated by a COFDM demodulator represented by block 35.

Block 36 represents a commutator, receiving the digital signals demodulated in the demodulators 31, 33, 35; one of these three signals selected by the user through the block 17 is present at the output of block 36. This signal is QAM remodulated by a QAM modulator, represented by block 37, and then converted by a converter represented by block 38 into the above said personal channel for the exclusive use of a single user, which is comprised in a frequency band ranging from 47 to 862 MHz, preferably 230 to 445 MHz. Each user is therefore the owner of a universal transmodulator 29, containing a converter with a fixed frequency output channel for his own personal use. The signal is then sent to the mixer 3 to be distributed as previously described.

It has to be appreciated that demodulation and remodulation of the QAM signal, which are apparently superfluous operations, are performed to recover the bit error rate eventually introduced by the cable distribution.

It should also be noticed that the system still provides for a "return channel" module, which can be contained in the interface or user terminal 17, allowing the user himself to send a selection control signal to blocks 12, 30, 32, 34 and 36 using a signal being preferably FSK or PSK, allocated to a channel, for example in the range 41-46.5 MHz. Advantageously, this signal can be sent through the common distribution coaxial cable of the system.

As it can be assumed from the above description with reference to Fig. 5, through a proper grouping of several specific functions within a single device, i.e. the transmodulator 29, it is then possible the use for each individual user only one modulator 37 and one converter 38, instead of three modulators and three converters as described with reference to Fig. 3.

It should also be noticed that the above universal transmodulator 29 can be advantageously used both for a signals distribution system in a condominium and/or community environment and in the instance of a single system.

The various parts of the universal transmodulator 29, i.e. the selection means 30, 32, 34, 36, the demodulation means 31, 33, 35, the modulation means 37 and the conversion means 38, can be obviously be housed in one same container, with clear practical advantages, also in view of the system installation and the reduction of its composing elements.

The distribution system of a plurality of signals in a condominium and/or community environment represented in Fig. 3 or Fig. 4 operates only on the so-called downstream signal, i.e. the signal received by the provider or broadcaster, whereas it does not allow the user to operate for transmitting an upstream signal to the provider.

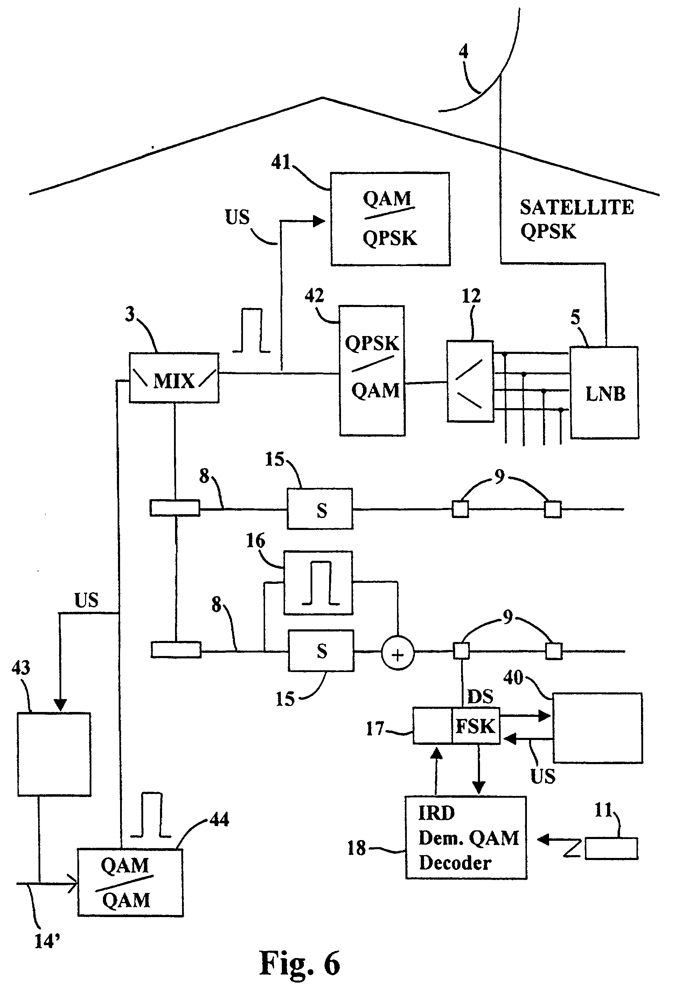

Fig. 6 therefore represents the diagram of another variant embodiment of the distribution system of a plurality of television signals in a condominium and/or community environment shown in Fig. 3. In this figure, the blocks related to both terrestrial analog and digital television signals are omitted; moreover, the remaining blocks of Fig. 6 indicating the same reference number have the same function of the blocks already shown in Fig. 3.

Compared to Fig. 3, five new blocks indicated with 40, 41, 42, 43 and 44, respectively are shown in Fig. 6, which will now be described in detail.

Block 40 represents a terminal, used by the user to transmit upstream type signals US and receive downstream type signals DS, which is directly connected to the interface 17 previously described with reference to Fig. 3.

Said terminal 40 performs the following known functions:
- personal computer function, for elaborating the upstream signals US to be transmitted and the received downstream signals DS;
- encoder function, for encoding the upstream signals US to be transmitted;
- QAM modulator function, for modulating the upstream signals US to be transmitted;
- SCPC type QAM tuner function, for the reception of the downstream signals DS;
- QAM demodulator function, for demodulating the downstream signals DS;
- decoder function, for decoding the received downstream signals DS.

Downstream signals DS being received and upstream signals US being transmitted by block 40 are allocated to the above personal channel for the exclusive use by the user, as explained in the following.

The distribution system of a plurality of digital signals in a condominium and/or community environment uses the satellite to send the return signals towards the provider. Therefore, the upstream signal US is sent, through the interface 17, the filter 16, the cable 8 and the mixer 3, from the block 40 to an SCPC transmodulator indicated by the block 40. The latter, which demodulates said upstream signal US according to QAM coding, remodulates it according to the QPSK coding in accordance with the SCPC procedure, then convert said upstream signal US in a frequency being compatible with the frequencies available in a satellite channel, and finally send it to the aerial 4 for its transmission to the satellite. The downstream signal DS being received by the aerial 4 is sent to a transmodulator 42 which, besides the function pertaining to the block 13 of Fig 3, also operates as a tuner for the multimedial signals QPSK modulated in accordance with the SCPC procedure, being received from a satellite channel; as a result the downstream signal DS being received at the block 42, upon reception of a proper control sent by block 40, is demodulated in QPSK under SCPC procedure, remodulated in QAM coding and converted into a frequency band contained in the above personal channel. Thus, the downstream signal DS reaches the block 40, through the mixer 3, the cable 8, the filter 16 and the interface 17.

If the distribution system of a plurality of digital signals in a condominium and/or community environment uses cable transmission, the upstream signal US is sent by block 40, through blocks 17, 16 and 8, to the mixer 3, and then to an SCPC transmodulator indicated by block 43. Here the upstream signal US is converted into a frequencies band compatible with the frequencies associated with a cable channel; subsequently the upstream signal US is sent to the service provider through the coaxial cable 14'. The downstream signal DS, on the contrary, is selected by the transmodulator 44, which besides the functions performed by the block 14 previously described, tunes the downstream signal DS being QAM modulated under SCPC procedure and convert it into a frequencies band corresponding to the band of the above personal channel. The downstream signal DS then reaches block 40 through blocks 3, 8, 16 and 17.

Blocks 41 and 42 may be advantageously housed in a same device; the same applies for blocks 43 and 44, which can also be contained in one device. Still more advantageously, all blocks 41, 42, 43, 44 can be housed together in a single device.

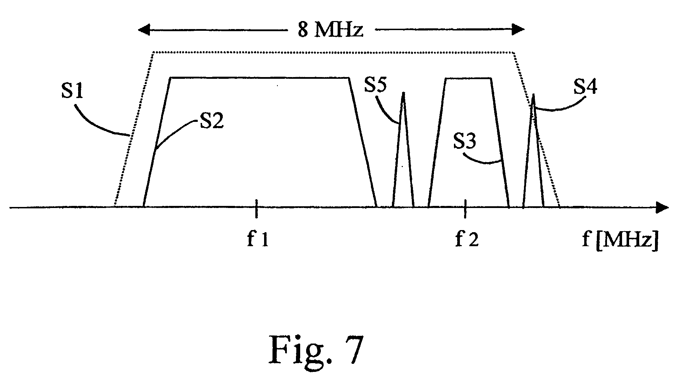

Allocation of the upstream signals US and downstream signals DS in the personal channel is shown in Fig. 7, where the hatched line S1 indicates the frequency band of the personal channel, normally 8 MHz wide; the solid line S2 represents the band occupied by the downstream signal DS to which a carrier f₁ is associated, whereas the line S3 represents the band of the upstream signal US, to which a carrier f₂ is associated.

Fig. 7 also shows some possible frequency allocations of the FSK or PSK modulated return channel, which is used, as previously mentioned, to control the blocks of the distribution system through the interface 17. In particular, the above return channel can be located in an area not occupied by the upstream signals US and the downstream signals DS, as indicated with reference number S5, or in an area where the frequency response of the personal channel is gradually reduced to zero, i.e. a so-called roll-off area, as indicated with reference number S4.

If the upstream signals US and the downstream signals DS are simultaneously available in the personal channel, i.e. when the system operates with frequency multiplexing (FDMA procedure, i.e. Frequency Division Multiplexing Access), it is clear that bands S2 and S3 should not overlap. On the other hand, if the upstream signals US and the downstream signals DS are available at different times in the above personal channel, then a time multiplexing operation (TDMA procedure, i.e. Time Division Multiplexing Access) will take place.

Obviously, when the personal channel is used to receive digital television signals and/or audio signals and/or data, the user disables blocks 40, 41, 43 through the interface 17 and the return channel, and switches blocks 42 and 44 to the functions already described for blocks 13 and 14, respectively.

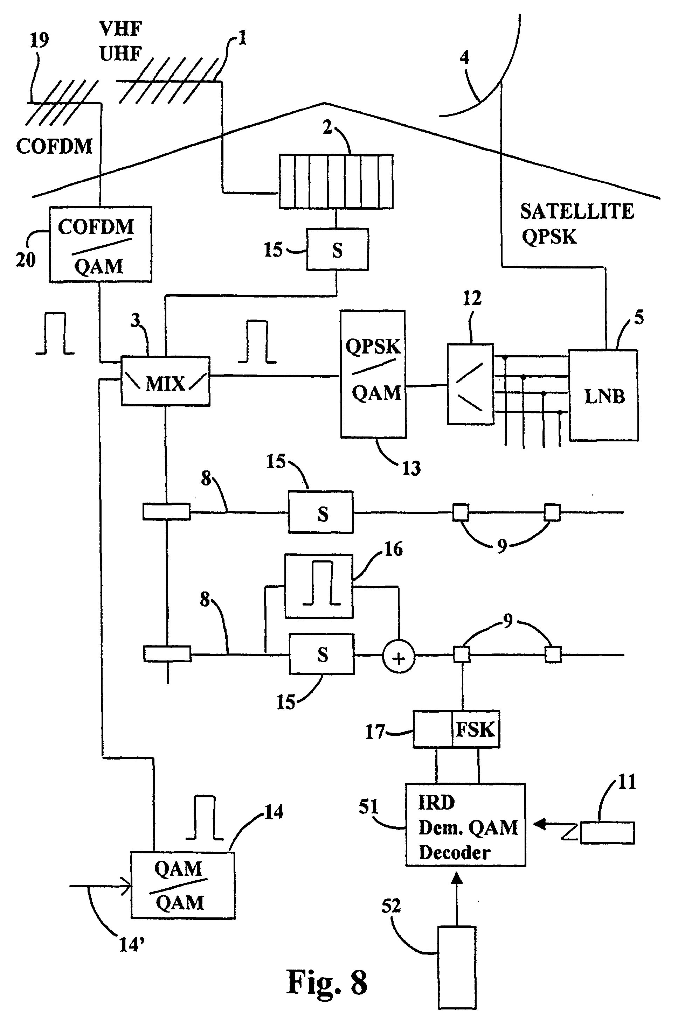

Fig. 8 shows the diagram of a further variant embodiment of the distribution system of a plurality of digital signals in a condominium and/or community environment according to the invention. In Fig. 8, the blocks having the same reference number perform the same function of the blocks already represented in Fig. 3.

In Fig. 8 a new block indicated with 51 is shown, instead of the block 18 illustrated in Fig. 3, representing an IRD receiver apt to read one or more smart cards 52, as better detailed later.

Each broadcaster or provider adopts for pay channels his own conditioned access system, and therefore a particular set top box, receiver 51 and smart card 52 are necessary for the vision, which are usually supplied by the broadcaster himself.

According to the present invention, should a member of the condominium decide to make a subscription, for example, to pay channels irradiated by satellite, in addition to the devices already provided for digital channels reception from the satellite (i.e., a transponder preselector circuit 12 and a QPSK/QAM transmodulator 13, which generate his personal channel for exclusive use), he would need also need the receiver 51; said receiver, besides demodulating in QAM and decoding the signal, has also to perform the descrambling operation required to make the signal itself usable. In order to perform the latter operation, the receiver 51 has to be fitted with a reader capable of reading the information associated with the smart card 52, which contains the electronic key necessary for enabling the use of the interactive services through descrambling. Besides information required for allowing the descrambling at the receiver 51, also the information necessary to the QPSK/QAM transmodulator 13 and the transponder preselector 12 for tuning on the channels transmitting the pay programs are inserted in the smart card 52.

Said tuning information comprise in particular the frequency of the channels to be inserted in the personal channel, where said information have to be sent to the transmodulator 13; said information also comprise the polarization type (horizontal or vertical), bit rate and frequency band (high or low) of the signals to be received, which have to be sent to the transponder preselector circuit 12. The receiver 51 transfers the above information, through the return channel, to the transponder preselector 12 and the QPSK/QAM transmodulator 13, which can thus be tuned on the channels enabled by the smart card 52. Obviously, mutual interaction between the receiver 51 and the associated smart card 52, the transponder preselector 12 and the QPSK/QAM transmodulator 13 shall be permitted, and this is obtained by a proper programming of the microprocessors controlling the above devices. For this reason, the receiver 51 and the associated smart card 52, the transponder preselector 12 and the QPSK/QAM transmodulator 13 are usually manufactured and supplied as a whole, usually on a rent basis, by the broadcaster transmitting the pay programs. In order to prevent that a user may eventually use the above QPSK/QAM transmodulator 13 also to receive pay channels transmitted by other broadcasters, a further "software electronic key" is inserted by the installer in the QPSK/QAM transmodulator 13, so that when the smart card 52 is inserted in the receiver 51, the QPSK/QAM transmodulator 13 may only be tuned on the channels enabled by the smart card 52 associated with the broadcaster supplying the devices. In other words, if a different smart card 52 which does not contain the same software electronic key is inserted in the transmodulator 13, the transmodulator 13 operation will be inhibited Insertion of said software electronic key, i.e. a proper digital signal, may for instance be provided using a serial port of the microprocessor controlling the QPSK/QAM transmodulator 13, such a port being accessible through a connector from outside the QPSK/QAM transmodulator 13. Obviously, if no smart card 52 is inserted in the receiver 51, the system may be tuned on any free access channel.

Furthermore, with a view to protect the privacy of more condominium users subscribing the same program, the system according to the invention provides that the frequency of one's personal channel can be inserted, for example by the installer, in each user's smart card 52, so that the receiver 51 will only receive the signal in said personal channel. Thus, even if any user is able to receive the personal channel of another user in his own receiver 51, for example by tampering the selective channel-pass filter 16, said receiver 51 controlled by the smart card 52 would not be able to proceed to descrambling and decoding.

The above situation can be easily extended to a situation where pay channels are transmitted by cable, i.e. digital signals CATV (CAble TV) modulated in QAM being received through the coaxial cable 14' or through digital terrestrial television signals modulated in COFDM (Coded Orthogonal Frequency Division Multiplexing) being received through the aerial 19. In such circumstances, the smart card 52 contains tuning information for the respective transmodulators 14 and 20.

It is obvious that many changes are possible to the system according to the present invention, without departing from the novelty spirit of the inventive idea.

For instance, the return-channel can be radio frequency irradiated, instead of being transmitted by cable; in this case, blocks 12, 13, 14 and 20 have to be equipped with appropriate known radiofrequency reception devices.

Additionally, the block 14 may provide for the possibility of demodulating and remodulating the QAM signal, for recovering the bit error rate introduced by the cable distribution.

Also, distribution to buildings or single flats may be obtained in a "wireless" configuration, i.e. without cables, using networks known as MMDS (Multi-channel Multipoint Distribution System) and LMDS (Local Multipoint Distribution System).

Also in this instance, the signals from various sources are received by a sole equipment, consisting for example of blocks 1, 2, 3, 4, 12, 13, 14, 19, 20 of Fig. 3; the output signal of the mixer is then converted to high frequency (up to about 40 GHz) and then irradiated. The signal is received by known reception devices in the various buildings or also in the individual flats, is reconverted in the 47-862 MHz range and then distributed by cable as done at the mixer output 3 shown in Fig. 3.

The presence of the band-stop filter 15 may also be used not only for the filtering of the signals distributed by the system, but also to filter likely signals eventually available on a distribution network inside the flat. In fact, household distribution networks of both radio-television, information, operation and control signals are known, which often employ the same physical means used for the distribution of radio-television signals received from satellite, cable or aerial. Therefore, a suitable configuration of the band-stop filter 15 will prevent signals outcoming from inside the flat and their pick-up by other system users.

Moreover, if the CATV signal has a low bit error rate, the block 33 can be omitted in the universal transmodulator 29; in this instance the signal directly passes from the QAM tuner to the commutator 36; in this case, the latter needs a further output directly to the converter 28, which has to be used should the user select a QAM channel.

Moreover, tuners 30, 32, 34, or at least two of them, may be integrated in one extended band tuner, for example from 5 to 2150 MHz, containing inside the suitable filters and switching devices for selecting the input signal.

Demodulators 31, 33, 35, or at least two of them, can be obtained in one integrated circuit; similarly, also blocks 31, 33, 35, 36, 37 can be contained in a single integrated circuit.

The user terminal 17 can be an independent block, or be contained in the QAM tuner of the IRD receiver 18.

Furthermore, instead of using either the cable or the satellite as described above for both the upstream e downstream signals. the upstream channel can be sent by cable and the downstream signal received from the satellite, or viceversa. On the other hand the upstream signal, which as said is usually transmitted with a low bit rate, can be sent by telephone through a modem connected to the block 40, according to well-known techniques.

Moreover, SCPC transmodulators can comprise a device for storing transit data, commonly called buffer, wherein the incoming upstream signals are stored; the signals are sent when said buffer is substantially fully occupied by signals. In this instance, upstream signals may come from more personal channels, for instance when a number of users agrees to use one sole SCPC transmodulator for sending the signals e.g. by satellite. For example, tuning information contained in the smart card may be changed by the broadcaster, because the transponder frequency has changed, or new services have been purchased by the user, or the services transmission mode has changed, e.g. from MCPC to SCPC or viceversa. In this instance, the reception devices automatically fit the new situation through the instructions received from the smart card. The new data can be sent by a modem, usually incorporated in the receiver, or through the so-called Service Information (SI), i.e. service information expressly inserted in the digital signal transmitted.

It is clear that the receiver has to be equipped with a write device, among those known in the digital technology, for data insertion in the EEPROM memory of the smart card.

## Claims

1. A system for the distribution to a condominium and/or community environment of a plurality of information signals, comprising digital signals, entering said environment and being transmitted according to different standards, comprising means (1,4,14',19) for receiving said digital signals, means (2,5,7) for the amplification and the standard frequency conversion of said digital signals, means (3) for mixing said information signals on a distribution network (8) to a plurality of signal sockets (9), at least some of said digital signals being reserved to predetermined signal sockets (9) among said plurality, wherein, for each of said predetermined signal sockets (9), the system provides further means (13, 14, 20) for frequency converting one or more of the received reserved digital signals in reserved frequency portions (S1), or personal channels, of the band, said personal channels being reserved to the corresponding predetermined signal sockets (9), and forbidden to the remaining sockets (9) through means (15, 16) for allowing access to said personal channels (S1) of the band only to the corresponding signal sockets (9), said means (13, 14, 20) for frequency converting one or more of the received digital signals in personal channels (S1) of the band being commanded through respective user control means (11, 17, 18; 40; 51).

2. A system for the distribution to a condominium and/or community environment, according to claim 1, wherein said means (13, 14, 20) for frequency converting one or more of the received digital signals in personal channels (S1) of the band makes use of the same type of modulation (QAM) for each socket (9).

3. A system for the distribution to a condominium and/or community environment, according to claim 1, wherein the distribution network (8) of the information signals comprises a distribution support (8) realized by means of a coaxial cable.

4. A system for the distribution to a condominium and/or community environment, according to claim 1, wherein the distribution network (8) for the distribution of said information signals comprises MMDS and/or LMDS networks.

5. A system for the distribution to a condominium and/or community environment, according to claim 1, wherein said personal channel is 8 MHz wide.

6. A system for the distribution to a condominium and/or community environment, according to claim 1, wherein the digital signal being present in said personal channel is QAM modulated.

7. A system for the distribution to a condominium and/or community environment, according to claim 1, wherein said personal channel is contained in a frequency band being comprised between 47 to 862 MHz.

8. A system for the distribution to a condominium and/or community environment, according to claim 7, wherein said frequency band ranges preferably from 230 to 445 MHz.

9. A system for the distribution to a condominium and/or community environment, according to claim 1, wherein the means (15, 16) for allowing access to said personal channels (S1) comprises means (15,16) for filtering the personal channel, that are located upstream the signal socket (9).

10. A system for the distribution to a condominium and/or community environment, according to claim 1, wherein said filtering means (15, 16) comprises a band-stop filter (15), apt to eliminate the reception of the personal channels, by a receiver (18) through the signal socket (9).

11. A system for the distribution to a condominium and/or community environment, according to claim 10, wherein said filtering means (15, 16) further comprises, in correspondence of a predetermined signal socket (9), a channel-pass filter (16) is arranged in parallel to said band-stop filter (15), which is apt to let the personal channel pass through to the single user.

12. A system for the distribution to a condominium and/or community environment, according to claim 1, wherein the selection of the digital signal to be converted in said personal channel is performed by a return-channel.

13. A system for the distribution to a condominium and/or community environment, according to claim 12, wherein said return-channel is FSK modulated.

14. A system for the distribution to a condominium and/or community environment, according to claim 12, wherein said return-channel is PSK modulated.

15. A system for the distribution to a condominium and/or community environment, according to claim 12, wherein said return-channel is QPSK modulated.

16. A system for the distribution to a condominium and/or community environment, according to claim 12, wherein said return channel is QAM modulated.

17. A system for the distribution to a condominium and/or community environment, according to claim 12, wherein said return channel is bi-directional under TDMA procedure.

18. A system for the distribution to a condominium and/or community environment, according to claim 12, wherein said return channel has a band width of 128 KHz or multiples of it.

19. A system for the distribution to a condominium and/or community environment, according to claim 12, wherein said return channel is comprised between 41 and 46.5 MHz.

20. A system for the distribution to a condominium and/or community environment, according to claim 12, wherein return channel uses the same coaxial cable of distribution network (8) of the system.

21. A system for the distribution to a condominium and/or community environment, according to claim 12, wherein the return channel used by a user is not accessible to all other users of the system.

22. A system for the distribution to a condominium and/or community environment, according to claim 12, wherein said return-channel is radiofrequency irradiated.

23. A system for the distribution to a condominium and/or community environment, according to claim 1, wherein the means (13, 14, 20) for frequency converting one or more of the received reserved digital signals in reserved frequency portions (S1), or personal channels, of the band are obtained by means of a transmodulator (13,20;29;41,42,43,44).

24. A system for the distribution to a condominium and/or community environment, according to claim 1, wherein a user terminal (17) and an IRD receiver-decoder (18;40;51) are provided at the signal socket (9), which can be operated by a same remote-control (11).

25. A system for the distribution to a condominium and/or community environment, according to claim 1, wherein two or more means (13, 14, 20) for frequency converting one or more of the received digital signals in personal channels (S1) (13,14,20) are contained in a sole transmodulator device (29).

26. A system for the distribution to a condominium and/or community environment, according to claim 25, wherein said sole transmodulator device (29) comprises tuner means (30,32,34), which are apt to perform the selection of said digital signals within at least two frequency ranges, and demodulation means (31,33,35), which are apt to demodulate at least two of said digital signals transmitted with different standards.

27. A system for the distribution to a condominium and/or community environment, according to claim 26, wherein said transmodulator device (29) includes at least two tuners (30,32,34) for the selection of digital signals, and at least two demodulators (31,33,35) of said digital signals.

28. A system for the distribution to a condominium and/or community environment, according to claim 26, wherein said transmodulator device (29) also includes a commutator (36) apt for receiving the digital signals coming from said demodulators (31,33,35).

29. A system for the distribution to a condominium and/or community environment, according to claim 27, wherein said transmodulator device (29) also comprises a modulator (37) for remodulating the output signal of the commutator (36).

30. A system for the distribution to a condominium and/or community environment, according to claim 27, wherein said transmodulator device (29) also includes a converter (38) for converting in frequency the output signal of said modulator (37) into a personal channel.

31. A system for the distribution to a condominium and/or community environment, according to claim 1, wherein said user control means (11,17,18;40) are also apt to generate one or more digital signals in transmission or upstream signals (US) and convert them in frequency into the personal channel, and wherein second selection and handling means (41,43) are provided for said digital signals in transmission, and means (4,14') for the transmission of said upstream signals (US) from satellite and/or by cable.

32. A system for the distribution to a condominium and/or community environment, according to claim 31, wherein transmodulator means (42,44) and the second selection means (41,43) operate on the received downstream signals (DS) or on upstream signals (US) QAM modulated under SCPC procedure, respectively.

33. A system for the distribution to a condominium and/or community environment, according to claim 31, wherein said personal channel which can be accessed by said user only is used under FDMA procedure, i.e. the upstream signals (US) and downstream signals (DS) are simultaneously present in said personal channel.

34. A system for the distribution to a condominium and/or community environment, according to claim 33, wherein in said personal channel both the upstream signals (US) and the downstream signals (DS) occupy not overlapping frequency bands.

35. A system for the distribution to a condominium and/or community environment, according to claim 31, wherein the personal channel is used under TDMA procedure, i.e. both the upstream signals (US) and the downstream signals (DS) are not simultaneously present in the personal channel.

36. A system for the distribution to a condominium and/or community environment, according to claim 31, wherein said transmodulator means (42,44) and said second selection and handling means (41,43) are comprised in a single container.

37. A system for the distribution to a condominium and/or community environment, according to claim 1, wherein the user control means (11, 17, 18; 40; 51) comprises a receiver (51) apt to perform an access function to a plurality of conditioned access services, by reading the information contained in a smart card (52), and wherein said information contained in said smart card (52) controls the means (13, 14, 20) for frequency converting one or more of the received reserved digital signals in the personal channel.

38. A system for the distribution to a condominium and/or community environment, according to claim 37, wherein said information contained in the smart card (52) comprises information for tuning transmodulator means (13,14,20;29;41,42,43,44).

39. A system for the distribution to a condominium and/or community environment, according to claim 37, wherein said information contained in the smart card (52) comprises information for the tuning of transponder preselection means (12).

40. A system for the distribution to a condominium and/or community environment, according to claim 39, wherein the information for the tuning of the transponder preselection means (12) are selection information of the bands of the channels to be tuned.

41. A system for the distribution to a condominium and/or community environment, according to claim 39, wherein the information for the tuning of the transponder preselection means (12) are information for determining the polarization of the channels to be tuned.

42. A system for the distribution to a condominium and/or community environment, according to claim 38, wherein said information contained in the smart card (52) comprises frequency information of the channels to be tuned.

43. A system for the distribution to a condominium and/or community environment, according to claim 37, wherein said information contained in the smart card (52) also comprises frequency information of said personal channel.

44. A system for the distribution to a condominium and/or community environment, according to claim 37, wherein the selection means (12,13,14,20;29;41,42,43,44) and the smart card (52) contain respective electronic keys, whose congruence enables the operation of said distribution system of a plurality of signals to a condominium and/or community environment.

45. A system for the distribution to a condominium and/or community environment, according to claim 37, wherein the control means (51) contains a device for writing data in a program memory of a microprocessor contained in the smart card (52).

46. A system for the distribution to a condominium and/or community environment, according to claim 45, wherein said program memory is an EEPROM type memory.

47. A system for the distribution to a condominium and/or community environment, according to claim 45, wherein the device for writing data in a program memory of a microprocessor contained in the smart card (52) operates on data sent to the control means (51) by modem.

48. A system for the distribution to a condominium and/or community environment, according to claim 45, wherein said device for writing data in a program memory of a microprocessor contained in the smart card (52) operates on data sent to the control means (51) by means of the Service Information contained in the received digital signal.

49. A system for the distribution to a condominium and/or community environment, according to claim 1, wherein said means (15, 16) for allowing access to said personal channels (S1) are apt to prevent the passage of signals generated inside a further distribution network associated to a signal socket (9), in particular being inside a dwelling or flat.

50. Method for the distribution to a condominium and/or community environment, of a plurality of information signals, including digitals signals, at least some of digital signals being reserved to predetermined signal sockets in the environment, comprising the steps of:
- receiving said information signals, comprising digital signals;
- operating a frequency conversion of the received digital signals;
- mixing said digital signals on a distribution network (8) that distributes said digital signals to the sockets (9)
- controlling the digital signals received by a specific socket (9) through remote control means
wherein
the step of operating the frequency conversion of the received digital signals comprises the step of operating the frequency conversion of each reserved digital signal required by a specific socket in reserved frequency portions (S1), or personal channels, that are exclusively associated with corresponding predetermined signal sockets, and in that the step of controlling the digital signals comprises the step of remote controlling by a user the operation of frequency conversion of each reserved digital signal required by a specific socket in a reserved frequency portion (S1), for the purpose of selecting the content of said reserved frequency portion (S1).

51. Method for the distribution to a condominium and/or community environment, of a plurality of information signals according to claim 50, further comprising the step of operating a frequency selection in the frequency portion of each personal channel (S1), between the distribution network (8) and a receiver (18) associated to the respective personal channel (S1).

52. Method for the distribution to a condominium and/or community environment, of a plurality of information signals according to claim 51, further comprising the step of frequency filtering the frequency portions associated to the personal channels (S1) between the distribution network (8) and a receiver (18).

53. Method for the distribution to a condominium and/or community environment, of a plurality of information signals according to claim 51, wherein the step of operating the frequency conversion of each reserved digital signal required by a specific socket in a reserved frequency portion (S1), or personal channels, converts said reserved digital signals in unique type of modulation (QAM).

## Patentansprüche

1. System für die Verteilung von mehreren Informationssignalen in einer Wohnanlage und/oder einer Gemeinschaftsumgebung, wobei die Informationssignale digitale Signale umfassen, die in die Umgebung gelangen und gemäß unterschiedlichen Standards übertragen werden, enthaltend Mittel (1, 4, 14', 19) zum Empfangen der digitalen Signale, Mittel (2, 5, 7) für die Verstärkung und die Standardfrequenzumsetzung der digitalen Signale, Mittel (3) zum Mischen der Informationssignale in einem Verteilnetzwerk (8) für mehrere Signalstecker (9), wobei zumindest einige der digitalen Signale für vorbestimmte Signalstecker (9) aus der Vielzahl von Signalsteckern (9) reserviert sind, wobei für jeden vorbestimmten Signalstecker (9) das System weiterhin Mittel (13, 14, 20) für die Frequenzumsetzung eines oder mehrerer der empfangenen, reservierten digitalen Signale in reservierte Frequenzabschnitte (S1) oder individuell Kanäle des Bandes bereitstellt, wobei die individuellen Kanäle für entsprechende vorbestimmte Signalstecker (9) reserviert sind und für die verbleibenden Stecker (9) durch Mittel (15, 16), die den Zugang zu den individuellen Kanälen (S1) des Bandes nur den entsprechenden Signalsteckern (9) ermöglichen, ausgeschlossen sind, wobei die Mittel (13, 14, 20) für die Frequenzumsetzung eines oder mehrerer der empfangenen digitalen Signale in individuelle Kanäle (S1) des Bandes durch entsprechende Benutzersteuermittel (11, 17, 18; 40; 51) gesteuert werden.

2. System für die Verteilung in einer Wohnanlage und/oder einer Gemeinschaftsumgebung nach Anspruch 1, wobei die Mittel (13, 14, 20) für die Frequenzumsetzung eines oder mehrerer der empfangenen digitalen Signale in individuelle Kanäle (S1) des Bandes die gleiche Modulationsart (QAM) für jeden Stecker (9) benutzen.

3. System für die Verteilung in einer Wohnanlage und/oder einer Gemeinschaftsumgebung nach Anspruch 1, wobei das Verteilnetzwerk (8) der Informationssignale einen Verteilträger (8) enthält, der durch ein Koaxialkabel gebildet ist.

4. System für die Verteilung in einer Wohnanlage und/oder einer Gemeinschaftsumgebung nach Anspruch 1, wobei das Verteilnetzwerk (8) zum Verteilen der Informationssignale MMDS- und/oder LMDS-Netzwerke enthält.

5. System für die Verteilung in einer Wohnanlage und/oder einer Gemeinschaftsumgebung nach Anspruch 1, wobei der individuelle Kanal 8 MHz breit ist.

6. System für die Verteilung in einer Wohnanlage und/oder einer Gemeinschaftsumgebung nach Anspruch 1, wobei das in dem individuellen Kanal vorhandene digitale Signal QAM moduliert ist.

7. System für die Verteilung in eine Wohnanlage und/oder einer Gemeinschaftsumgebung nach Anspruch 1, wobei der individuelle Kanal in einem Frequenzband enthalten ist, das zwischen 47 MHz bis 862 MHz liegt.

8. System für die Verteilung in eine Wohnanlage und/oder einer Gemeinschaftsumgebung nach Anspruch 7, wobei das Frequenzband vorzugsweise von 230 MHz bis 445 MHz reicht.

9. System für die Verteilung in einer Wohnanlage und/oder einer Gemeinschaftsumgebung nach Anspruch 1, wobei das Mittel (15, 16), welches den Zugang zu den individuellen Kanälen (S1) ermöglicht, Mittel (15, 16) zum Filtern des individuellen Kanals enthält, die stromaufwärts der Signalstecker (9) angeordnet sind.

10. System für die Verteilung in einer Wohnanlage und/oder einer Gemeinschaftsumgebung nach Anspruch 1, wobei das Filtermittel (15, 16) ein Bandsperrfilter (15) enthält, das in der Lage ist, den Empfang der individuellen Kanäle durch einen Empfänger (18) über den Signalstecker (9) auszuschließen.

11. System für die Verteilung in einer Wohnanlage und/oder einer Gemeinschaftsumgebung nach Anspruch 10, wobei das Filtermittel (15, 16) weiterhin in Übereinstimmung mit einem vorbestimmten Signalstecker (9) ein Kanaldurchlassfilter (16) enthält, welches parallel zu den Bandsperrfilter (15) angeordnet ist und welches in der Lage ist, den individuellen Kanal zu dem einzelnen Benutzer hindurchgehen zu lassen.

12. System für die Verteilung in einer Wohnanlage und/oder einer Gemeinschaftsumgebung nach Anspruch 1, wobei die Auswahl des in den individuellen Kanal umzusetzenden digitalen Signals durch einen Rückkanal ausgeführt wird.

13. System für die Verteilung in einer Wohnanlage und/oder einer Gemeinschaftsumgebung nach Anspruch 12, wobei der Rückkanal FSK moduliert ist.

14. System für die Verteilung in einer Wohnanlage und/oder einer Gemeinschaftsumgebung nach Anspruch 12, wobei der Rückkanal PSK moduliert ist.

15. System für die Verteilung in einer Wohnanlage und/oder einer Gemeinschaftsumgebung nach Anspruch 12, wobei der Rückkanal QPSK moduliert ist.

16. System für die Verteilung in einer Wohnanlage und/oder einer Gemeinschaftsumgebung nach Anspruch 12, wobei der Rückkanal QAM moduliert ist.

17. System für die Verteilung in einer Wohnanlage und/oder einer Gemeinschaftsumgebung nach Anspruch 12, wobei der Rückkanal unter dem TDMA-Verfahren bidirektional ist.

18. System für die Verteilung in einer Wohnanlage und/oder einer Gemeinschaftsumgebung nach Anspruch 12, wobei der Rückkanal eine Bandbreite von 128 kHz oder einem Mehrfachen hiervon aufweist.

19. System für die Verteilung an eine Wohnanlage und/oder Gemeinschaftsumgebung nach Anspruch 12, wobei der Rückkanal zwischen 41 MHz und 56,5 MHz liegt.

20. System für die Verteilung in einer Wohnanlage und/oder einer Gemeinschaftsumgebung nach Anspruch 12, wobei der Rückkanal das gleiche Koaxialkabel des Verteilnetzwerks (8) des Systems verwendet.

21. System für die Verteilung in einer Wohnanlage und/oder einer Gemeinschaftsumgebung nach Anspruch 12, wobei der Rückkanal, der durch den Benutzer verwendet wird, nicht für alle anderen Benutzer des Systems zugänglich ist.

22. System für die Verteilung in eine Wohnanlage und/oder einer Gemeinschaftsumgebung nach Anspruch 12, wobei der Rückkanal Hochfrequenz abstrahlt.

23. System für die Verteilung in einer Wohnanlage und/oder einer Gemeinschaftsumgebung nach Anspruch1, wobei die Mittel (13, 14, 20) für die Frequenzumsetzung eines oder mehrerer der empfangenen, reservierten digitalen Signale in reservierte Frequenzabschnitte (S1) oder individuelle Kanäle des Bandes mittels eines Transmodulators (13, 20; 29; 41, 42, 43, 44) erhalten werden.

24. System für die Verteilung in einer Wohnanlage und/oder einer Gemeinschaftsumgebung nach Anspruch 1, wobei ein Benutzeranschluss (17) und ein IRD-Empfängerdecoder (18; 40; 51) an dem Signalstecker (9) vorgesehen sind, welche durch die gleiche Fernsteuerung (11) ferngesteuert werden können.

25. System für die Verteilung in einer Wohnanlage und/oder einer Gemeinschaftsumgebung nach Anspruch 1, wobei zwei oder mehrere Mittel (13, 14, 20) für die Frequenzumsetzung eines oder mehrerer der empfangenen digitalen Signale in individuelle Kanäle (S1) in einer einzigen Transmodulatoreinrichtung enthalten sind.

26. System für die Verteilung in einer Wohnanlage und/oder einer Gemeinschaftsumgebung nach Anspruch 25, wobei die einzige Transmodulatoreinrichtung (29) Tunermittel (30, 32, 34) enthält, welche in der Lage sind, die Auswahl der digitalen Signale innerhalb zumindest zweier Frequenzbereiche auszuführen, und weiter Demodulationsmittel (31, 33, 35) enthält, welchen in der Lage sind, zumindest zwei der digitalen Signale, die mit unterschiedlichen Standards übertragen werden, zu demodulieren.

27. System für die Verteilung in einer Wohnanlage und/oder einer Gemeinschaftsumgebung nach Anspruch 26, wobei die Transmodulatoreinrichtung (29) zumindest zwei Tuner (30, 32, 34) für die Auswahl von digitalen Signalen und zumindest zwei Demodulatoren (31, 33, 35) für die digitalen Signale enthält.

28. System für die Verteilung in einer Wohnanlage und/oder einer Gemeinschaftsumgebung nach Anspruch 26, wobei die Transmodulatoreinrichtung (29) darüber hinaus einen Kommutator (36) enthält, der in der Lage ist, die digitalen Signale zu empfangen, welche von den Demodulatoren (31, 33, 35) kommen.

29. System für die Verteilung in einer Wohnanlage und/oder einer Gemeinschaftsumgebung nach Anspruch 27, wobei die Transmodulatoreinrichtung (29) darüber hinaus einen Modulator (37) zum Rückmodulieren des Ausgangsignals des Kommutators (36) enthält.

30. System für die Verteilung in einer Wohnanlage und/oder einer Gemeinschaftsumgebung nach Anspruch 27, wobei die Transmodulatoreinrichtung (29) darüber hinaus einen Konverter (38) zur Frequenzumsetzung des Ausgangssignals des Modulators (37) in einen vorbestimmten Kanal enthält.

31. System für die Verteilung in einer Wohnanlage und/oder einer Gemeinschaftsumgebung nach Anspruch 1, wobei die Steuermittel (11, 17, 18; 40) darüber hinaus in der Lage sind, eines oder mehrere digitale Signale bei der Übertragung der Zulaufsignale (US) zu erzeugen und diese in der Frequenz in den individuellen Kanal umzusetzen, und wobei zweite Auswähl- und Handhabungsmittel (41, 43) für die digitalen Signale bei der Übertragung und Mittel (4, 14') für die Übertragung der Zulaufsignale (US) aus einem Satellit und/oder durch Kabel vorgesehen sind.

32. System für die Verteilung in einer Wohnanlage und/oder einer Gemeinschaftsumgebung nach Anspruch 31, wobei die Transmodulatormittel (42, 44) und die zweiten Auswählmittel (41, 43) auf den empfangenen Ablaufsignalen (DS) oder auf den Zulaufsignalen (US) unter dem SCPC-Verfahren QAM modulieren.

33. System für die Verteilung in einer Wohnanlage und/oder einer Gemeinschaftsumgebung nach Anspruch 31, wobei der individuelle Kanal, der nur durch den Benutzer zugänglich ist, unter dem FDMA-Verfahren verwendet wird, d. h. die Zulaufsignale (US) und die Ablaufsignale (DS) sind simultan in dem individuellen Kanal vorhanden.

34. System für die Verteilung in einer Wohnanlage und/oder einer Gemeinschaftsumgebung nach Anspruch 33, wobei in dem individuellen Kanal sowohl die Zulaufsignale (US) als auch die Ablaufsignale (DS) keine sich überlappenden Frequenzbänder besitzen.

35. System für die Verteilung in einer Wohnanlage und/oder einer Gemeinschaftsumgebung nach Anspruch 31, wobei der individuelle Kanal unter dem TDMA-Verfahren verwendet wird, d. h., dass sowohl die Zulaufsignale (US) als auch die Ablaufsignale (DS) nicht gleichzeitig in dem individuellen Kanal vorhanden sind.

36. System für die Verteilung in einer Wohnanlage und/oder einer Gemeinschaftsumgebung nach Anspruch 31, wobei die Transmodulatormittel (42,44) und die zweiten Auswähl- und Handhabungsmittel (41, 43) in einem einzelnen Behälter enthalten sind.

37. System für die Verteilung in einer Wohnanlage und/oder einer Gemeinschaftsumgebung nach Anspruch 1, wobei die Benutzersteuermittel (11, 17, 18; 40; 51) einen Empfänger (51) enthalten, der in der Lage ist, eine Zugangsfunktion zu mehreren bedingten Zugangsdienstleistungen durch Lesen der Informationen, die in einer Smartcard (52) enthalten sind, auszuführen, und wobei die in der Smartcard (52) enthaltenen Informationen die Mittel (13, 14, 20) für die Frequenzumsetzung einer oder mehrere der empfangenen reservierten digital Signale in dem individuellen Kanal steuern.

38. System für die Verteilung in einer Wohnanlage und/oder einer Gemeinschaftsumgebung nach Anspruch 37, wobei die in der Smartcard (52) enthaltenen Informationen Informationen zum Abstimmen der Transmodulatormittel (13, 14, 20; 29; 41, 42, 43, 44) aufweisen.

39. System für die Verteilung in einer Wohnanlage und/oder einer Gemeinschaftsumgebung nach Anspruch 37, wobei die in der Smartcard (52) enthaltenen Informationen Informationen zum Abstimmen der Transpondervorauswählmittel aufweisen.

40. System für die Verteilung in einer Wohnanlage und/oder einer Gemeinschaftsumgebung nach Anspruch 39, wobei die Informationen für das Abstimmen der Transpondervorauswählmittel (12) Auswählinformationen der Bänder der abzustimmenden Kanäle sind.

41. System für die Verteilung in einer Wohnanlage und/oder einer Gemeinschaftsumgebung nach Anspruch 39, wobei die Informationen für die Abstimmung der Transpondervorauswählmittel (12) Informationen zum Bestimmen der Polarisation der abzustimmenden Kanäle sind.

42. System für die Verteilung in einer Wohnanlage und/oder einer Gemeinschaftsumgebung nach Anspruch 38, wobei die Informationen, die in der Smartcard (52) enthalten sind, Frequenzinformationen der abzustimmenden Kanäle enthalten.

43. System für die Verteilung in einer Wohnanlage und/oder einer Gemeinschaftsumgebung nach Anspruch 37, wobei die in der Smartcard (52) enthaltene Information darüber hinaus Frequenzinformationen des individuellen Kanals enthalten.

44. System für die Verteilung in einer Wohnanlage und/oder einer Gemeinschaftsumgebung nach Anspruch 37, wobei die Auswählmittel (12, 13, 14, 20; 29; 41, 42, 43, 44) und die Smartcard (52) entsprechende elektronische Schlüssel enthalten, deren Übereinstimmung den Betrieb des Verteilersystems von mehreren Signalen in einer Wohnanlage und/oder einer Gemeinschaftsumgebung ermöglicht.

45. System für die Verteilung in einer Wohnanlage und/oder einer Gemeinschaftsumgebung nach Anspruch 37, wobei das Steuermittel (51) eine Einrichtung zum Einschreiben von Daten in einen Programmspeicher eines Mikroprozessors, der in der Smartcard (52) enthalten ist, aufweisen.

46. System für die Verteilung in einer Wohnanlage und/oder einer Gemeinschaftsumgebung nach Anspruch 45, wobei der Programmspeicher ein EEPROM-Speicher ist.

47. System für die Verteilung in einer Wohnanlage und/oder einer Gemeinschaftsumgebung nach Anspruch 45, wobei die Einrichtung zum Einschreiben von Daten in einen Programmspeicher eines Mikroprozessors, der in der Smartcard (52) enthalten ist, bei Daten arbeitet, die durch ein Modem dem Steuermittel (51) übertragen werden.

48. System für die Verteilung in einer Wohnanlage und/oder einer Gemeinschaftsumgebung nach Anspruch 45, wobei die Einrichtung zum Einschreiben von Daten in einen Programmspeicher eines Mikroprozessors, der in der Smartcard (52) enthalten ist, bei Daten arbeitet, die mittels der Serviceinformationen, welche in dem empfangenen digitalen Signal enthalten sind, zu den Steuermittel (51) gesandt werden.

49. System für die Verteilung in einer Wohnanlage und/oder einer Gemeinschaftsumgebung nach Anspruch 1, wobei die Mittel (15, 16) zum Ermöglichen des Zugang zu den individuellen Kanälen (S1) in der Lage sind, den Durchgang von Signalen zu verhindern, die innerhalb eines weiteren Verteilnetzwerks erzeugt werden, welches zu einem Signalstecker (9) gehört, insbesondere innerhalb eines Wohnhauses oder einer Wohnung.

50. Verfahren für die Verteilung von mehreren Informationssignalen in einer Wohnanlage und/oder einer Gemeinschaftsumgebung, wobei die Informationssignale digitale Signale enthalten und wobei zumindest einige der digitalen Signale für vorbestimmte Signalstecker in der Umgebung reserviert sind, enthaltend die folgenden Schritte:
- Empfangen der Informationssignale, die digitale Signale enthalten;
- Anwenden einer Frequenzumsetzung auf die empfangenen digitalen Signale;
- Mischen der digitalen Signale in einem Verteilnetzwerk (8), welches die digitalen Signale an die Stecker (9) verteilt;
- Steuern der digitalen Signale, die durch einen bestimmten Stecker (9) empfangen werden, mittels Fernsteuermittel;
wobei der Schritt des Anwendens der Frequenzumsetzung auf die empfangenen digitalen Signale den Schritt des Anwendens der Frequenzumsetzung jedes reservierten digitalen Signals, das durch einen bestimmten Stecker angefordert wird, in reservierte Frequenzabschnitte (S1) oder individuelle Kanäle, die exklusiv zu den Steckern gehören, enthält und wobei der Schritt des Steuerns der digitalen Signale den Schritt des Fernsteuerns der Anwendung der Frequenzumsetzung jedes reservierten digitalen Signals, das durch einen bestimmten Stecker angefordert wird, in einen reservierten Frequenzabschnitt (S1) zum Zwecke des Auswählens des Inhaltes des reservierten Frequenzabschnittes (S1) durch einen Benutzer enthält.

51. Verfahren für die Verteilung von mehreren Informationssignalen in einer Wohnanlage und/oder einer Gemeinschaftsumgebung nach Anspruch 50, weiterhin enthaltend den Schritt des Anwendens einer Frequenzauswahl in dem Frequenzabschnitt jedes individuellen Kanals (S1) zwischen dem Verteilnetzwerk (8) und einem Empfänger (18), der zu dem entsprechenden individuellen Kanal (S1) gehört.

52. Verfahren für die Verteilung von mehreren Informationssignalen in einer Wohnanlage und/oder einer Gemeinschaftsumgebung nach Anspruch 51, weiterhin enthaltend den Schritt der Frequenzfilterung der Frequenzabschnitte, die zu den individuellen Kanälen (S1) zwischen dem Verteilnetzwerk (8) und einem Empfänger (18) gehören.

53. Verfahren für die Verteilung in einer Wohnanlage und/oder einer Gemeinschaftsumgebung von mehreren Informationssignalen nach Anspruch 51, wobei der Schritt des Anwendens der Frequenzumsetzung jedes reservierten digitalen Signals, das durch einen bestimmten Stecker angefordert wird, in einen reservierten Frequenzabschnitt (S1) oder in einen individuellen Kanal die reservierten digitalen Signale in einer einheitlichen Modulationsart (QAM) konvertiert.

## Revendications

1. Système pour distribuer, à un environnement de condominium et/ou de communauté, une pluralité de signaux d'informations comprenant des signaux numériques, pénétrant dans ledit environnement et transmis selon différents standards, comprenant des moyens (1,4,14',19) pour recevoir lesdits signaux numériques, des moyens (2,5,7) pour amplifier et convertir la fréquence standard desdits signaux numériques, des moyens (3) pour mélanger lesdits signaux d'information dans un réseau de distribution (8) à une pluralité de prises de réception de signaux (9), au moins certains desdits signaux numériques étant réservés à des prises de réception de signaux prédéterminées (9) parmi ladite pluralité de prises de réception de signaux (9), dans lequel, pour chacune desdites prises prédéterminées de réception de signaux (9), le système fournit d'autres moyens (13,14,20) pour réaliser la conversion de fréquence d'un ou de plusieurs des signaux numériques réservés reçus en les amenant dans des gammes de fréquences réservées, ou des canaux personnels, de la bande, lesdits canaux personnels étant réservés aux prises prédéterminées correspondantes (9) de réception de signaux et étant interdits pour les autres prises (9) par l'intermédiaire de moyens (15,16) permettant l'accès auxdits canaux personnels (S1) de la bande uniquement aux prises correspondantes (9) de réception de signaux, lesdits moyens (13,14,20) de conversion de fréquence pour un ou plusieurs des signaux numériques reçus dans des canaux personnels (S1) de la bande étant commandés par des moyens de commande d'utilisateur respectifs (11,17,18;40;51).

2. Système de distribution à un environnement de condominium et/ou de communauté selon la revendication 1, dans lequel lesdits moyens (13,14,20) pour convertir la fréquence d'un ou de plusieurs des signaux numériques reçus dans des canaux personnels (S1) de la bande utilisent le même type de modulation (QAM) pour chaque prise (9).

3. Système de distribution à un environnement de condominium et/ou de communauté selon la revendication 1, dans lequel le réseau de distribution (8) des signaux d'information comprend un support de distribution (8) réalisé à l'aide d'au moins un câble coaxial.

4. Système de distribution à un environnement de condominium et/ou de communauté selon la revendication 1, dans lequel le réseau de distribution (8) pour la distribution desdits signaux d'informations comprend des réseaux MMDS et/ou LMDS.

5. Système de distribution à un environnement de condominium et/ou de communauté selon la revendication 1, dans lequel ledit canal personnel possède une largeur de 8 MHz.

6. Système de distribution à un environnement de condominium et/ou de communauté selon la revendication 1, dans lequel le signal numérique présent dans ledit canal personnel est modulé selon une modulation QAM.

7. Système de distribution à un environnement de condominium et/ou de communauté selon la revendication 1, dans lequel ledit canal personnel est contenu dans une bande de fréquences comprises entre 47 et 862 MHz.

8. Système de distribution à un environnement de condominium et/ou de communauté selon la revendication 7, dans lequel lesdites gammes de bandes de fréquences sont comprises de préférence entre 230 et 445 MHz.

9. Système de distribution à un environnement de condominium et/ou de communauté selon la revendication 1, dans lequel les moyens (15,16) permettant l'accès auxdits canaux personnels (S1) comprennent des moyens (15,16) pour filtrer le canal personnel, qui sont situés en amont de la prise de réception de signaux (9).

10. Système de distribution à un environnement de condominium et/ou de communauté selon la revendication 1, dans lequel lesdits moyens de filtrage (15,16) comprennent un filtre coupe-bande (15) apte à éliminer la réception des canaux personnels, par un récepteur (18) par l'intermédiaire de la prise de réception de signaux (9).

11. Système de distribution à un environnement de condominium et/ou de communauté selon la revendication 10, dans lequel lesdits moyens de filtrage (15,16) comprennent en outre, en correspondance avec une prise prédéterminée (9) de réception de signaux, un filtre de transmission de canal (16) qui est disposé en parallèle avec ledit filtre coupe-bande (15), qui est apte à transmettre le canal personnel en direction de l'utilisateur unique.

12. Système de distribution à un environnement de condominium et/ou de communauté selon la revendication 1, dans lequel la sélection du signal numérique devant être converti en ledit canal personnel est effectuée par un canal de retour.

13. Système de distribution à un environnement de condominium et/ou de communauté selon la revendication 12, dans lequel ledit canal de retour est modulé selon une modulation FSK.

14. Système de distribution à un environnement de condominium et/ou de communauté selon la revendication 12, dans lequel ledit canal de retour est modulé selon une modulation PSK.

15. Système de distribution à un environnement de condominium et/ou de communauté selon la revendication 12, dans lequel ledit canal de retour est modulé selon une modulation QPSK.

16. Système de distribution à un environnement de condominium et/ou de communauté selon la revendication 12, dans lequel ledit canal de retour est modulé selon une modulation QAM.

17. Système de distribution à un environnement de condominium et/ou de communauté selon la revendication 12, dans lequel ledit canal de retour est bidirectionnel dans la procédure DTMA.

18. Système de distribution à un environnement de condominium et/ou de communauté selon la revendication 12, dans lequel ledit canal de retour possède une largeur de bande égale à 128 kHz ou à des multiples de cette valeur.

19. Système de distribution à un environnement de condominium et/ou de communauté selon la revendication 12, dans lequel ledit canal de retour est compris entre 41 et 46,5 MHz.

20. Système de distribution à un environnement de condominium et/ou de communauté selon la revendication 12, dans lequel ledit canal de retour utilise le même câble coaxial du réseau de distribution (8) du système.

21. Système de distribution à un environnement de condominium et/ou de communauté selon la revendication 12, dans lequel le canal de retour utilisé par un utilisateur n'est pas accessible à l'ensemble d'autres utilisateurs du système.

22. Système de distribution à un environnement de condominium et/ou de communauté selon la revendication 12, dans lequel ledit canal de retour est irradié par des fréquences radio.

23. Système de distribution à un environnement de condominium et/ou de communauté selon la revendication 1, dans lequel les moyens (13,14,20) pour convertir la fréquence d'un ou de plusieurs signaux numériques réservés reçus dans des games de fréquences réservées (S1), ou des canaux personnels, de la bande sont constitués à l'aide d'un transmodulateur (13,20;29;41, 42,43,44).

24. Système de distribution à un environnement de condominium et/ou de communauté selon la revendication 1, dans lequel un terminal d'utilisateur (17) et un récepteur-décodeur IRD (18;40;51), qui peuvent être actionnés par la même télécommande (11) sont prévus au niveau de la prise (9) de réception de signaux.

25. Système de distribution à un environnement de condominium et/ou de communauté selon la revendication 1, dans lequel deux ou plusieurs moyens (13,14,20) pour appliquer une conversion de fréquence à un ou plusieurs des signaux numériques reçus dans des canaux personnels (S1) (13,14,20) sont contenus dans un dispositif de transmodulateur unique (29).

26. Système de distribution à un environnement de condominium et/ou de communauté selon la revendication 25, dans lequel ledit dispositif formant transmodulateur unique (29) comprend des moyens formant tuner (30,32,34), qui sont aptes à réaliser la sélection dudit signal numérique dans au moins deux gammes de fréquences et des moyens de démodulation (31,33,35), qui sont aptes à démoduler au moins ledit signal numérique transmis avec des standards différents.

27. Système de distribution à un environnement de condominium et/ou de communauté selon la revendication 26, dans lequel ledit dispositif formant transmodulateur (22) comprend au moins deux tuners (30,32,34) servant à sélectionner des signaux numériques, et au moins deux démodulateurs (31,33,35) desdits signaux numériques.

28. Système de distribution à un environnement de condominium et/ou de communauté selon la revendication 26, dans lequel ledit dispositif formant transmodulateur (29) inclut également un commutateur (36) apte à recevoir les signaux numériques arrivant desdits démodulateurs (31,33,35).

29. Système de distribution à un environnement de condominium et/ou de communauté selon la revendication 27, dans lequel ledit dispositif formant transmodulateur (29) comprend également un modulateur (37) pour remoduler le signal de sortie du commutateur (36).

30. Système de distribution à un environnement de condominium et/ou de communauté selon la revendication 27, dans lequel ledit dispositif formant transmodulateur (29) inclut également un convertisseur (38) pour convertir la fréquence du signal de sortie dudit modulateur (37) pour l'amener dans un canal personnel.

31. Système de distribution à un environnement de condominium et/ou de communauté selon la revendication 1, dans lequel lesdits moyens de commande d'utilisateur (11,17,18;40) sont également aptes à produire un ou plusieurs signaux numériques pour la transmission de signaux amont (US) et leur faire subir une conversion de fréquence pour les amener dans le canal personnel, et dans lequel des seconds moyens de sélection et de manipulation (41,43) sont prévus pour lesdits signaux numériques lors de la transmission, et des moyens (14') pour la transmission desdits signaux amont (US) depuis un satellite et/ou par câble.

32. Système de distribution à un environnement de condominium et/ou de communauté selon la revendication 31, dans lequel les moyens formant transmodulateur (40,41) et les seconds moyens de sélection (41,43) agissent respectivement sur les signaux aval reçus (DS) ou sur des signaux amont modulés (US) selon une modulation (QAM) dans la procédure SCPC.

33. Système de distribution à un environnement de condominium et/ou de communauté selon la revendication 31, dans lequel ledit canal personnel, auquel ledit utilisateur seul peut accéder, est utilisé dans la procédure FDMA, c'est-à-dire que les signaux amont (US) et les signaux aval (DS) sont présents simultanément dans ledit canal personnel.

34. Système de distribution à un environnement de condominium et/ou de communauté selon la revendication 33, dans lequel, dans ledit canal personnel, à la fois les signaux amont (US) et les signaux aval (DS) n'occupent pas des bandes de fréquence en chevauchement.

35. Système de distribution à un environnement de condominium et/ou de communauté selon la revendication 31, dans lequel le canal personnel est utilisé dans la procédure TDMA, c'est-à-dire qu'à la fois les signaux amont (US) et les signaux aval (DS) ne sont pas simultanément présents dans le canal personnel.

36. Système de distribution à un environnement de condominium et/ou de communauté selon la revendication 31, dans lequel lesdits moyens formant transmodulateur (42,44) et lesdits seconds moyens de sélection et de manipulation (41,43) sont disposés dans un seul conteneur.

37. Système de distribution à un environnement de condominium et/ou de communauté selon la revendication 1, dans lequel lesdits moyens de commande d'utilisateur (11,17,18;40;51) comprennent un récepteur (51) apte à exécuter une fonction d'accès à une pluralité de services d'accès conditionnels par lecture de l'information contenue dans une carte à mémoire (52), et dans lequel ladite information contenue dans ladite carte à mémoire (52) commande les moyens (13,14,20) pour amener par conversion un ou plusieurs des signaux numériques réservés reçus, dans le canal personnel.

38. Système de distribution à un environnement de condominium et/ou de communauté selon la revendication 37, dans lequel ladite information contenue dans la carte à mémoire (52) comprend une information pour le réglage d'accord des moyens formant transmodulateur (13,14,20;29; 41,42,43,44).

39. Système de distribution à un environnement de condominium et/ou de communauté selon la revendication 37, dans lequel ladite information contenue dans la carte à mémoire (52) comprend une information pour le réglage d'accord de moyens (12) de présélection de transporteur.

40. Système de distribution à un environnement de condominium et/ou de communauté selon la revendication 39, dans lequel l'information servant à accorder les moyens (12) de présélection de transpondeur sont une information de sélection des bandes des canaux devant être accordés.

41. Système de distribution à un environnement de condominium et/ou de communauté selon la revendication 39, dans lequel une information pour le réglage d'accord des moyens (12) de présélection de transpondeur est une information servant à déterminer la polarisation des canaux devant être accordés.

42. Système de distribution à un environnement de condominium et/ou de communauté selon la revendication 38, dans lequel ladite information contenue dans la carte à mémoire (52) comprend une information de fréquence des canaux devant être accordés.

43. Système de distribution à un environnement de condominium et/ou de communauté selon la revendication 37, dans lequel ladite information contenue dans la carte à mémoire (52) comprend également une information de fréquence dudit canal personnel.

44. Système de distribution à un environnement de condominium et/ou de communauté selon la revendication 37, dans lequel les moyens de sélection (12,13,14,20;29;41,42,43,44) et la carte à mémoire (52) contiennent des codes électroniques respectifs, dont la congruence permet le fonctionnement dudit système de distribution d'une pluralité de signaux à un environnement de condominium et/ou de communauté.

45. Système de distribution à un environnement de condominium et/ou de communauté selon la revendication 37, dans lequel les moyens de commande (51) contiennent un dispositif pour écrire des données dans la mémoire de programme d'un microprocesseur contenu dans la carte à mémoire (52).

46. Système de distribution à un environnement de condominium et/ou de communauté selon la revendication 45, dans lequel ladite mémoire de programme est une mémoire du type EEPROM.

47. Système de distribution à un environnement de condominium et/ou de communauté selon la revendication 45, dans lequel le dispositif pour l'écriture de données dans une mémoire de programme du microprocesseur contenu dans la carte à mémoire (52) agit sur des données envoyées aux moyens de commande (51) par un modem.

48. Système de distribution à un environnement de condominium et/ou de communauté selon la revendication 45, dans lequel ledit dispositif pour l'écriture de données dans une mémoire de programme du microprocesseur contenue dans la carte à mémoire (52) agit sur des données envoyées aux moyens de commande (51) au moyen de l'information de service contenue dans le signal numérique reçu.

49. Système de distribution à un environnement de condominium et/ou de communauté selon la revendication 1, dans lequel lesdits moyens (15,16) permettant l'accès auxdits canaux personnels (S1) sont à même d'empêcher le passage de signaux produits à l'intérieur d'un autre réseau de distribution associé à une autre prise (9) de réception de signaux, en particulier à l'intérieur d'un logement ou d'un appartement.

50. Procédé pour distribuer à un environnement de condominium et/ou de communauté une pluralité de signaux d'informations incluant des signaux numériques, au moins certains des signaux numériques étant réservés à des prises prédéterminées de réception de signaux dans l'environnement, comprenant les étapes consistant à :
- recevoir lesdits signaux d'informations, comprenant des signaux numériques;
- réaliser une conversion de fréquence des signaux numériques reçus;
- mélanger lesdits signaux numériques dans un réseau de distribution (8) qui distribue lesdits signaux numériques aux prises (9);
- commander les signaux numériques reçus par une prise spécifique (9) à l'aide de moyens de commande à distance,
selon lequel
l'étape d'exécution de conversion de fréquence des signaux numériques reçus comprend l'étape consistant à réaliser la conversion de fréquence de chaque signal numérique réservé requis par une prise spécifique dans des gammes de fréquences réservées (S1), ou des canaux personnels, qui sont associés exclusivement à des prises correspondantes prédéterminées de réception de signaux et que l'étape de commande des signaux numériques comprend l'étape de commande à distance, par un utilisateur, de l'opération de conversion de fréquence de chaque signal numérique réservé, requis par une prise spécifique dans une gamme de fréquences réservée (S1), pour la sélection du contenu de ladite gamme de fréquences réservée (S1).

51. Procédé pour distribuer à un environnement de condominium et/ou de communauté une pluralité de signaux d'informations selon la revendication 50, comprenant en outre l'étape d'exécution d'une sélection de fréquence dans la gamme de fréquences de chaque canal personnel (S1), entre le réseau de distribution (8) et un récepteur (18) associé au canal personnel respectif (S1).

52. Procédé pour distribuer à un environnement de condominium et/ou de communauté une pluralité de signaux d'informations selon la revendication 51, comprenant en outre l'étape consistant à filtrer la fréquence des gammes de fréquences associées aux canaux personnels (S1) entre le réseau de distribution (8) et un récepteur (18).

53. Procédé pour distribuer à un environnement de condominium et/ou de communauté une pluralité de signaux d'informations selon la revendication 51, dans lequel l'étape d'exécution de la conversion de fréquence de chaque signal numérique réservé, requis par une prise spécifique, dans une gamme de fréquences réservée (S1), ou des canaux personnels, convertit lesdits signaux numériques réservés en un type unique de modulation (QAM).
